# EUROPÄISCHE PATENTSCHRIFT

(11) **EP 3 750 767 B1**
(45) Veröffentlichungstag und Bekanntmachung des Hinweises auf die Patenterteilung: **04.05.2022**
(21) Anmeldenummer: 20164808.6
(22) Anmeldetag: 23.03.2020
(51) Int. Cl.: B61D 17/22, B60D 5/00

(54) **ÜBERGANGSEINRICHTUNG ZUM VERBINDEN VON ZWEI BEWEGLICH MITEINANDER VERBUNDENEN FAHRZEUGTEILEN**
TRANSITION DEVICE FOR CONNECTING TWO MOVABLY INTERCONNECTED VEHICLE PARTS
DISPOSITIF DE PASSAGE PERMETTANT DE RACCORDER DEUX PIÈCES DE VÉHICULE RELIÉES MOBILE L'UNE À L'AUTRE

(43) Veröffentlichungstag der Anmeldung: 16.12.2020
(73) Patentinhaber: Hübner GmbH & Co. KG, 34123 Kassel (DE)
(72) Erfinder: Goebels, André, 34134 Kassel (DE); Ehrlich, Harald, 34225 Baunatal (DE)
(74) Vertreter: Patentanwälte Walther Hinz Bayer PartGmbB

(56) Entgegenhaltungen:
- CN-U- 202 106 979
- CN-U- 208 993 686
- DE-U1- 8 417 550
- JP-B2- 2 951 631

## Beschreibung

Die Erfindung betrifft eine Übergangseinrichtung zum Verbinden von zwei beweglich miteinander verbundenen Fahrzeugteilen, insbesondere eines Schienenfahrzeugs, mit den Merkmalen des Oberbegriffs von Anspruch 1.

### STAND DER TECHNIK

Übergangseinrichtungen zwischen zwei beweglich miteinander verbundenen Fahrzeugteilen beispielsweise eines Schienenfahrzeuges können im Bodenbereich eine Entwässerungsvorrichtung aufweisen, um Flüssigkeiten wie Wasser, die sich im Bodenbereich angesammelt haben, vom Durchgangsbereich innerhalb der Übergangseinrichtung nach außen abzuführen.

Übergangseinrichtungen können unterschieden werden zwischen druckertüchtigten und nicht druckertüchtigten Übergangseinrichtungen. Nicht druckertüchtigte Übergangseinrichtungen sind zumindest nicht vollständig druckdicht ausgeführt, sodass ein einfacher und dauerhaft offener bodenseitiger Abfluss zur Bildung einer Entwässerungsvorrichtung ausreichend ist, der eine Fluidpassage aufweist, durch die Flüssigkeiten, beispielsweise Tauwasser, Reinigungsflüssigkeiten oder sonstige Flüssigkeiten abgeleitet werden können.

Druckertüchtigte Übergangseinrichtungen sind hingegen dazu ausgelegt, plötzliche Druckschwankungen gegenüber dem begehbaren Durchgangsbereich zurückzuhalten, die zwischen dem Durchgangsbereich innerhalb des Balges und dem Außenbereich außerhalb des Balges auftreten können. Plötzliche Druckschwankungen entstehen beispielsweise bei schnell fahrenden Schienenfahrzeugen, die für höhere Geschwindigkeiten ausgelegt sind und beispielsweise in einen Tunnel einfahren und aus diesem auch wieder herausfahren. Plötzliche Druckschwankungen können auch entstehen, wenn bei höheren Geschwindigkeiten ein Schienenfahrzeug entgegenkommt. Die Druckdifferenz durch eine Druckwelle oder einen Sog kann sowohl positiv als auch negativ sein. Konkret kann innerhalb des Balges im Durchgangsbereich der Luftdruck deutlich über dem Außendruck liegen, wenn außerhalb des Schienenfahrzeuges ein Sog entsteht. Umgekehrt kann der Druck der Luft im Durchgangsbereich deutlich niedriger sein als außerhalb des Balges, wenn ein plötzlicher Überdruck außerhalb der Übergangseinrichtung entsteht.

Würde die Entwässerungsvorrichtung im Bodenbereich der Übergangseinrichtung durch eine dauerhaft geöffnete Fluidpassage gebildet werden, so kann bei Normalfahrt zwar Flüssigkeit durch die Fluidpassage nach außen ins Freie gelangen. Bei einer plötzlich auftretenden Druckschwankung würde jedoch bei einer dauerhaft geöffneten Fluidpassage der Entwässerungsvorrichtung der Luftdruck im Durchgangsbereich innerhalb der Übergangseinrichtung stark ansteigen oder stark abfallen. Eine in den Durchgangsbereich eindringende Druckschwankung ist jedoch stets zu vermeiden, insbesondere aus Komfortgründen für die Passagiere.

Bei druckertüchtigen Übergangseinrichtungen ist es bekannt, eine Entwässerungsvorrichtung im Bodenbereich der Übergangseinrichtung anzuordnen, insbesondere in Verbindung mit einem Kuppelrahmen des Balges. Dabei ist die Fluidpassage der Entwässerungsvorrichtung im Betrieb durch einen Verschluss verschlossen, und er wird nur im Rahmen einer Wartung beispielsweise manuell geöffnet, um Wasser oder sonstige Flüssigkeiten abfließen zu lassen. Eine solche Übergangseinrichtung ist zum Beispiel im Gebrauchsmuster CN202106979U beschrieben. Dies führt zu dem Nachteil, dass insbesondere witterungsbedingt sich ansammelndes Tauwasser auch in größeren Mengen dauerhaft im Bodenbereich der Übergangseinrichtung verbleibt, was es zu vermeiden gilt.

### OFFENBARUNG DER ERFINDUNG

Aufgabe der Erfindung ist die Verbesserung einer Übergangseinrichtung zum Verbinden von zwei beweglich miteinander verbundenen Fahrzeugteilen, mit der die vorstehend beschriebenen Nachteile aus dem Stand der Technik überwunden werden können. Insbesondere soll eine Entwässerungsvorrichtung für eine Übergangseinrichtung verbessert werden, die auch bei druckertüchtigen Übergangseinrichtungen Verwendung finden kann und mit der auch im Betrieb des Fahrzeugs Wasser aus dem Durchgangsbereich nach außen abgeführt werden kann.

Diese Aufgabe wird ausgehend von einer Übergangseinrichtung gemäß dem Oberbegriff des Anspruches 1 in Verbindung mit den kennzeichnenden Merkmalen gelöst. Vorteilhafte weitere Ausbildungen der Erfindung sind in den abhängigen Ansprüchen angegeben.

Die Erfindung schließt die technische Lehre ein, dass die Entwässerungsvorrichtung einen Ventilkörper aufweist, durch den die Fluidpassage abhängig von einer Druckdifferenz zwischen einem innerhalb und außerhalb des Durchgangsbereiches wirkenden Druck selbsttätig verschließbar ist.

Kerngedanke der Erfindung ist die Substitution eines nur manuell öffenbaren Verschlusses einer Entwässerungsvorrichtung durch einen Ventilkörper, der so ausgebildet ist, dass dieser eine Bewegung ausführen kann, die erzeugt wird durch eine Druckdifferenz zwischen dem Durchgangsbereich und einem Außenbereich der Übergangseinrichtung. Der Wert der Druckdifferenz ist dabei in seinem Betrag zu betrachten, sodass die Druckdifferenz sowohl negativ als auch positiv sein kann, insbesondere sodass der Ventilkörper gleichermaßen schließt, wenn der Druck im Durchgangsbereich größer oder kleiner ist als außerhalb der Übergangseinrichtung.

Insbesondere ist vorgesehen, dass der Ventilkörper zwischen wenigstens zwei der folgenden drei Stellungen beweglich in oder an einem Grundkörper der Entwässerungsvorrichtung angeordnet ist:
- Eine Öffnungsstellung, in der die Fluidpassage für den Durchtritt eines Fluids, insbesondere Wasser, geöffnet ist, wobei die Öffnungsstellung einnehmbar ist, wenn die Druckdifferenz einen vorgegebenen Grenzwert nicht überschreitet;
- eine erste Schließstellung, in der die Fluidpassage insbesondere druckdicht verschlossen ist, wobei der Ventilkörper die erste Schließstellung zumindest dann einnimmt, wenn der Grenzwert der Druckdifferenz überschritten ist und der Druck innerhalb des Durchgangsbereichs größer ist als außerhalb des Durchgangsbereichs; und
- eine zweite Schließstellung, in der die Fluidpassage insbesondere druckdicht verschlossen ist, wobei der Ventilkörper die zweite Schließstellung zumindest dann einnimmt, wenn der Grenzwert der Druckdifferenz überschritten ist und der Druck innerhalb des Durchgangsbereiches kleiner ist als außerhalb des Durchgangsbereiches.

Insbesondere ist damit der Ventilkörper zur Einnahme von wenigstens zwei oder sogar von drei Stellungen an oder innerhalb dem Grundkörper der Entwässerungsvorrichtung ausgebildet. Anders ausgedrückt wird der Ventilkörper zumindest immer dann aus seiner Öffnungsstellung in eine seiner Schließstellungen überführt, wenn die Druckdifferenz den vorgegebenen Grenzwert überschreitet. In welche Schließstellung der Ventilkörper überführt wird, hängt dabei von dem Vorzeichen der herrschenden Druckdifferenz ab. Der Ventilkörper kann sich davon abgesehen aber auch dann in einer Schließstellung befinden, wenn die Druckdifferenz kleiner ist als der vorgegebene Grenzwert, aber keine oder nur eine unwesentliche Menge an Flüssigkeit vorhanden ist. Der vorgegebene Grenzwert für die Druckdifferenz kann gemäß den Anforderungen zur Erreichung der Druckertüchtigung gewählt sein. Dabei kann Einfluss darauf genommen werden, bei welcher Druckdifferenz der Ventilkörper in seine Schließstellung überführt wird, indem dieser z. B. entgegen einer Gegenkraft von seiner Öffnungsstellung in die Schließstellung ausgelenkt wird. Die Gegenkraft kann dabei beispielsweise durch die Gewichtskraft des Ventilkörpers oder eine Federkraft oder eine elektromagnetische Kraft o. ä. realisiert sein.

Der Ventilkörper ist vorzugsweise beweglich in oder an dem Grundkörper der Entwässerungsvorrichtung geführt. Dabei ist der Ventilkörper so ausgebildet, dass dieser nur durch das Vorherrschen einer Druckdifferenz in den vorstehend beschriebenen Situationen bereits selbsttätig, d. h. auch automatisch die Öffnungsstellung, die erste Schließstellung oder die zweite Schließstellung einnimmt.

Die selbsttätige Überführung des Ventilkörpers zwischen der Öffnungsstellung, der ersten Schließstellung und der zweiten Schließstellung kann beispielsweise realisiert sein, indem die Entwässerungsvorrichtung einen Sensor zum Erfassen der Druckdifferenz aufweist. Abhängig von der erfassten Druckdifferenz kann eine Betätigungseinrichtung zum Betätigen des Ventilkörpers gesteuert werden, durch welche der Ventilkörper in die jeweils gewünschte Stellung überführt wird. Beispielsweise kann der Ventilkörper mit der Betätigungseinrichtung elektromagnetisch betätigt werden. Beispielsweise kann die Betätigungsvorrichtung einen Hubmagneten umfassen, und der Ventilkörper kann in Verbindung oder in baulicher Einheit mit einem Tauchanker des Hubmagneten ausgeführt sein. Dabei ist es möglich, dass die Entwässerungsvorrichtung einen Grundkörper aufweist, der einen Spulenkörper umfasst, und der Ventilkörper kann aus einem magnetisierbaren Material ausgebildet sein oder ein solches aufweisen, um bei einer entsprechenden Bestromung der Spule zwischen den Stellungen bewegt zu werden. Es sind aber auch andere Ausführungen möglich, z. B. kann der Ventilkörper auch mittels eines Stellmotors o. ä. betätigt werden.

Zur vereinfachten Ausführung des Ventilkörpers verschließt dieser in seiner Schließstellung die Fluidpassage druckdicht. Hierfür kann der Dichtkörper mindestens ein Dichtelement, insbesondere aus Gummi, aufweisen, mit dem der Ventilkörper in seiner Ruhelage dichtend gegen eine entsprechende Gegendichtfläche anliegt, sodass die Fluidpassage insbesondere im Bereich eines Ausganges bzw. Einganges dichtend verschlossen ist. Alternativ kann der Ventilkörper selbst ein Dichtelement bilden, welches insbesondere aus Gummi ausgebildet ist. Dabei kann der Ventilkörper beispielsweise in Form eines Hohlkörpers ausgebildet sein, sodass der Ventilkörper geometrisch bedingt eine Dichte aufweist, die geringer ist als die Dichte von Wasser.

Generell gilt, dass - wenn der Ventilkörper eine Dichte aufweist, die geringer ist als die Dichte von Wasser - erreicht werden kann, dass der Ventilkörper grundsätzlich seine Schließstellung einnimmt. In Abhängigkeit von einer Flüssigkeitssäule kann er jedoch von seinem Ventilsitz bzw. gegenüber der Gegendichtfläche aufschwimmen und somit von seiner Schließstellung in die Öffnungsstellung überführt werden - zumindest dann, wenn die Druckdifferenz hinreichend klein ist.

Gemäß einer erfindungsgemäßen Ausführungsform der Übergangseinrichtung weist der Ventilkörper ein Führungsmittel zur Führung bei seiner Bewegung von seiner Öffnungs- in seine Schließstellungen auf. Das Führungsmittel kann am Ventilkörper selbst oder alternativ auch in oder an dem Grundkörper der Entwässerungsvorrichtung ausgebildet sein oder der Grundkörper der Entwässerungsvorrichtung bildet mit einem Abschnitt selber das Führungsmittel zur Führung des Ventilkörpers, insbesondere zur Ausführung der Hubbewegung. Ist das Führungsmittel am Ventilkörper ausgebildet, so kann dieses beispielsweise mittels Führungszapfen oder -stangen gebildet sein, die in Führungsöffnungen im Grundkörper entlang einer Ventilkörperachse geführt sind. Die Führungsöffnungen im Grundkörper bilden dann Gegenführungsmittel zu den Führungsmitteln am Ventilkörper, die durch die Führungszapfen oder -stangen gebildet sind und in die Führungsöffnungen hineinragen.

Der Grundkörper der Entwässerungsvorrichtung kann mit weiterem Vorteil eine Kammer bilden, in der der Ventilkörper beweglich aufgenommen ist, wobei der Ventilkörper optional aus der Kammer entnehmbar aufgenommen ist. So kann dieser z. B. zur Reinigung der Fluidpassage entnommen und/oder im Fall eines Verschleißes ausgetauscht werden.

Der Grundkörper kann geteilt ausgebildet sein, wobei zumindest zwei Grundkörperbauteile lösbar miteinander verbunden sind. Die lösbare Verbindung kann insbesondere durch eine Verschraubung realisiert sein. Es sind jedoch auch andere Verbindungen möglich, wie z. B. eine Clips- oder Bajonettverbindung. Die Teilung kann dabei insbesondere im Bereich der Kammer vorgesehen sein, so dass - wenn die Grundkörperbauteile nicht miteinander verbunden sind - die Kammer frei zugänglich ist. So lässt sich z. B. auf einfache Weise realisieren, dass der Ventilkörper im Bedarfsfall aus der Kammer entnommen werden kann.

Der Grundkörper kann als bauliche Einheit in eine vorbereitete Öffnung im Bodenbereich des Übergangs eingesetzt werden, beispielsweise in einer Bodenplatte oder in einem Teil des Balges oder in Verbindung mit einem Rahmenelement der Übergangseinrichtung, beispielsweise einem Mittelrahmen des Balges.

Die Kammer des Grundkörpers weist gemäß einer Ausführungsform einen Einlass auf, über den die Kammer mit dem Durchgangsbereich der Übergangseinrichtung fluidisch verbunden ist. Ferner kann die Kammer einen Auslass aufweisen, durch den die Kammer mit der Außenseite der Übergangseinrichtung verbunden ist. So kann Flüssigkeit über den Einlass in die Kammer eintreten und über den Auslass aus der Kammer austreten und ins Freie gelangen.

Um zu vermeiden, dass Feststoffpartikel, Verunreinigungen wie Schmutz und dergleichen in die Entwässerungsvorrichtung und insbesondere in die Fluidpassage, den Eingang und/oder den Ausgang gelangt, weist diese gemäß einem Ausführungsbeispiel vor dem Einlass in Richtung zum Durchgangsbereich ein Sieb auf, das zum Zurückhalten von Feststoffpartikeln, Verunreinigungen und dergleichen ausgebildet ist. Dabei ist es insbesondere hinreichend, das Sieb nur im Rahmen einer Wartung der Übergangseinrichtung zu reinigen. Das Sieb ist dafür vorteilhafterweise von der Entwässerungsvorrichtung entnehmbar ausgeführt.

Der Ventilkörper kann als Auftriebskörper ausgebildet sein. Konkret kann er dazu ein poröses Material wie Styropor, Kork und dergleichen aufweisen oder der Ventilkörper bildet einen Hohlkörper. Im allgemeinen Sinne der Erfindung besteht die Möglichkeit, den Ventilkörper auch als Auftriebskörper unabhängig von Form, Gestalt und Material auszuführen. Dabei steht im Vordergrund, dass der Ventilkörper eine Dichte aufweist, die geringer ist als die Dichte von Wasser. Füllt sich die Entwässerungsvorrichtung, insbesondere die Kammer im Grundkörper mit Flüssigkeit, so schwimmt der Ventilkörper auf und gibt den Auslass frei, sodass die Flüssigkeit aus der Kammer ins Freie gelangen kann. Dabei kann Flüssigkeit praktisch dauerhaft vom Durchgangsbereich innerhalb der Übergangseinrichtung durch den Einlass in die Kammer einlaufen. Ausgenommen sein kann z. B. eine Situation, in der der Druck außerhalb größer ist als innerhalb des Durchgangsbereichs und der Ventilkörper die Fluidpassage verschließt. Erreicht die Flüssigkeit innerhalb der Kammer einen Flüssigkeitsstand, der ausreicht, um den Ventilkörper aufschwimmen zu lassen, so wird der Auslass freigegeben und die Flüssigkeit kann ins Freie abgeführt werden.

Gemäß einer Ausgestaltung einer erfindungsgemäßen Übergangseinrichtung weist die Entwässerungsvorrichtung wenigstens ein Federelement auf, wobei der Ventilkörper entgegen einer von dem Federelement ausgeübten Federkraft in seine Schließstellung überführt werden kann. Findet ein solches Federelement Anwendung, so ist im Normalbetrieb des Schienenfahrzeuges die Fluidpassage durch die Entwässerungsvorrichtung zwischen Einlass und Auslass frei durchgängig, sodass Flüssigkeit dauerhaft aus dem Durchgangsbereich innerhalb der Übergangseinrichtung ablaufen kann. Im Falle einer plötzlichen Druckschwankung schließt der Ventilkörper gegen die Federkraft entweder gegen den Einlass oder gegen den Auslass, abhängig davon, ob außen der Überdruck entsteht oder innerhalb des Durchgangsbereiches der Überdruck entsteht.

Gemäß einer Ausführungsform ist der Ventilkörper als ein Flächenelement ausgebildet, mit dem wechselweise der Einlass oder der Auslass einer Kammer im Grundkörper verschließbar ist. Insbesondere kann der Ventilkörper dazu als eine Klappe oder eine Membran ausgebildet sein. Gemäß einer solchen Variante ist der Ventilkörper als Flatterventil oder Rückschlagventil ausgeführt, das insbesondere mit einem flächigen Element ausgeführt ist, das im Falle einer plötzlichen Druckschwankung entweder gegen den Einlass oder gegen den Auslass der Fluidpassage zur Anlage gelangt und diesen verschließt. Das Flächenelement kann dabei entgegen einer Kraft in die Schließstellung ausgelenkt werden. Z. B. kann die Kraft dadurch bewirkt werden, dass ein Verbindungsteil wie ein Filmscharnier, mit dem das Flächenelement an dem Grundkörper befestigt ist, elastisch verformt werden muss. Das Filmscharnier wirkt dabei als eine Art Federelement.

Der Ventilkörper kann in oder an dem Grundkörper der Entwässerungsvorrichtung so angeordnet oder aufgenommen sein, dass dieser in Richtung einer Ventilkörperachse translatorisch beweglich und/oder um eine Schwenkachse schwenkbar gelagert ist. Bildet der Ventilkörper beispielsweise einen Auftriebskörper oder ist der Ventilkörper mittels des Federelementes in der Öffnungsstellung gehalten, wird der Ventilkörper vorzugsweise translatorisch bewegt. Ist der Ventilkörper als Flächenelement ausgebildet, um gegen den Einlass oder gegen den Auslass zur Anlage zu gelangen, so wird dieser vorzugsweise um eine Schwenkachse schwenkbar gelagert.

Die Entwässerungsvorrichtung kann an dem Balg selbst angeordnet sein. Dazu kann die Entwässerungsvorrichtung grundsätzlich auf beliebige Weise mit dem Balg verbunden sein, z. B. durch Vernähen, Kleben, Vulkanisieren oder Verschrauben mit einer Mutter und Kontermutter. Dabei kann es ausreichend sein, eine Entwässerungsvorrichtung vorzusehen, die vorzugsweise an der tiefsten Stelle des Balgs angeordnet ist. Wenn der Balg mehrere Wellen oder Falten aufweist, kann auch in mehreren Wellen oder Falten und insbesondere in jeder Welle oder Falte eine Entwässerungsvorrichtung vorgesehen sein.

Gemäß einer weiteren erfindungsgemäßen Ausgestaltung ist der Ventilkörper der Entwässerungsvorrichtung aus einem Balgabschnitt des Balges selbst gebildet, wobei der Balgabschnitt mittels zueinander beabstandeter Flächenkörper umschlossen ist. Der Balgabschnitt ist grundsätzlich flexibel bzw. biegeweich und kann so wechselweise von innen gegen die sich gegenüber liegenden Flächenkörper zur Anlage gelangen, wenn eine Druckdifferenz zwischen dem innerhalb und außerhalb des Durchgangsbereichs wirkenden Druck auftritt. In den gegenüberliegenden Flächenkörpern sind zum einen ein Einlass und zum anderen ein Auslass eingebracht. , Gelangt der flexible, lappenartige Ventilkörper in Form des Balgabschnittes von innen gegen die Flächenkörper, so verschließt dieser den Einlass bzw. den Auslass.

Schließlich kann die Entwässerungsvorrichtung an einem Rahmenelement der Übergangseinrichtung angeordnet sein, insbesondere derart, dass die Fluidpassage fluchtend mit einer in der Übergangseinrichtung vorgesehenen Durchtrittsöffnung angeordnet ist. So kann sich in dem Rahmenelement ansammelnde Flüssigkeit abgeführt werden und so z. B. einem Rosten des Rahmenelements vorgebeugt werden. Bei dem Rahmenelement kann es sich insbesondere um einen Mittelrahmen und/oder einem Kuppelrahmen handeln. Diese dienen der Stabilisierung des Balgs und/oder dem Abstützen und Anbinden des Balgs an den Fahrzeugteilen bzw. einer die Fahrzeugteile verbindenden der Kupplung oder eines Gelenks.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Führungselement die Rede ist, so ist dies so zu verstehen, dass genau ein Führungselement, zwei Führungselemente oder mehrere Führungselemente vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Figur 1: eine schematische Ansicht einer Übergangseinrichtung mit einer Entwässerungsvorrichtung,
- Figur 2a-2c: ein erstes Ausführungsbeispiel einer Entwässerungsvorrichtung in drei verschiedenen Stellungen,
- Figur 3: ein Ausführungsbeispiel einer Entwässerungsvorrichtung mit einem Ventilkörper in Form einer Kugel,
- Figur 4: ein Ausführungsbeispiel einer Entwässerungsvorrichtung mit einem Ventilkörper in Form eines Zylinderkörpers,
- Figur 5: ein Ausführungsbeispiel einer Entwässerungsvorrichtung mit einem Ventilkörper in Form eines Doppelkegelkörpers,
- Figur 6: ein weiteres Ausführungsbeispiel der Entwässerungsvorrichtung mit einem Ventilkörper in Gestalt eines Flächenelementes mit zwei Schenkeln,
- Figur 7: ein Ausführungsbeispiel einer Entwässerungsvorrichtung mit einem Ventilkörper in Form eines einzigen Flächenelementes, das zur Anlage gegen einen Einlass und einen Auslass eines Grundkörpers ausgebildet ist,
- Figur 8: ein Ausführungsbeispiel einer Entwässerungsvorrichtung mit einem Ventilkörper, der aus einem Abschnitt des Balges selbst gebildet ist und
- Figur 9: eine Draufsicht auf das Ausführungsbeispiel der Entwässerungsvorrichtung gemäß Figur 8.

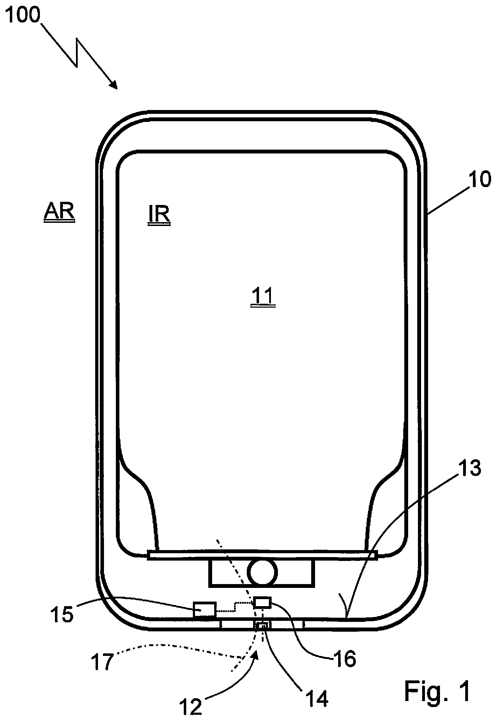

Figur 1 zeigt in schematisierter Weise eine Übergangseinrichtung 100 zum Verbinden von zwei beweglich miteinander verbundenen Fahrzeugteilen, beispielsweise Fahrzeugteile eines Schienenfahrzeuges, wobei eine solche Übergangseinrichtung 100 beispielhaft auch für Straßenfahrzeuge wie Busse und dergleichen Anwendung finden kann. Die Übergangseinrichtung 100 weist einen Balg 10 auf, der einen Durchgangsbereich 11 umschließt, welcher für Passagiere des Fahrzeuges begehbar ist. Damit trennt der Balg 10 einen Innenraum IR von einem Außenraum AR.

Übergangseinrichtungen 100 gemäß dem Ausführungsbeispiel sind auch als sogenannte druckertüchtige Übergangseinrichtungen 100 bekannt, die speziell dafür ausgebildet sind, plötzliche Druckschwankungen im Außenraum AR nicht in den Innenraum IR durchdringen zu lassen. Plötzliche Druckschwankungen entstehen beispielsweise bei schnellfahrenden Schienenfahrzeugen, wenn diese in einen Tunnel einfahren oder aus einem Tunnel herausfahren, oder es entsteht eine Druckwelle bei entgegenkommenden Schienenfahrzeugen, wobei zunächst ein Überdruck und anschließend ein Unterdruck auftreten können.

Die plötzliche Druckschwankung kann insofern also einen Überdruck oder einen Unterdruck des Außenraums AR gegenüber dem Innenraum IR beinhalten. Das hier gezeigte Beispiel einer Übergangseinrichtung 100 entspricht einer solchen druckertüchtigen Übergangseinrichtung 100. D. h. die Übergangseinrichtung 100 und insbesondere deren Balg 10 sind so ausgebildet, dass der Durchgangsbereich 11, der den Innenraum IR bildet, im Wesentlichen druckdicht ausgebildet ist gegenüber dem Außenraum AR.

Die Übergangseinrichtung 100 weist einen Bodenbereich 13 auf, wobei der Bodenbereich 13 beispielhaft aus einem unteren Abschnitt des Balges 10 gebildet ist. Es besteht alternativ die Möglichkeit, dass der Bodenbereich 13 aus einem Bodenelement ausgebildet ist, an den der Balg 10 lediglich heranreicht.

Im Bodenbereich 13 ist eine Entwässerungsvorrichtung 12 eingerichtet. Die Entwässerungsvorrichtung 12 bildet eine Fluidpassage 17 zum Abführen von Wasser aus dem Durchgangsbereich 11 nach außen. Das Wasser, jedoch auch sonstige Flüssigkeiten, kann durch die Entwässerungsvorrichtung 12 folglich vom Innenraum IR in den Außenraum AR überführt werden. Der Begriff des Außenraumes beschreibt vorliegend das Freie, wobei außerhalb des Balges 10 auch weitere Bauteile des Übergangs vorhanden sein können, beispielsweise ein Fahrzeuggelenk oder eine Kupplung.

Die Erfindung richtet sich auf eine Entwässerungsvorrichtung 12 mit einem Ventilkörper 14, durch den die Fluidpassage 17 abhängig von einer Druckdifferenz zwischen dem Innenraum IR und dem Außenraum AR des Durchgangsbereiches 11 selbsttätig verschließbar ist. Die selbsttätige und in diesem Sinne auch automatische Verschließbarkeit der Entwässerungsvorrichtung 12 mittels des Ventilkörpers 14 ist dann kurzfristig notwendig, wenn plötzliche Druckschwankungen zwischen dem Innenraum IR und dem Außenraum AR auftreten. Das mit dem Ventilkörper 14 gebildete Ventil ist erfindungsgemäß abhängig von einer Druckdifferenz zwischen dem innerhalb und außerhalb des Balges 13 herrschenden Druck abhängig eingerichtet. Insbesondere ist der Ventilkörper 14 so in oder an einem Grundkörper der Entwässerungsvorrichtung 12 angeordnet, dass der Ventilkörper 14 die Fluidpassage 17 druckabhängig verschließen kann. Die druckabhängige Verschließbarkeit der Entwässerungsvorrichtung 12 löst die Aufgabe der Erfindung derart, dass bei plötzlichen Druckschwankungen der Innenraum IR vom Außenraum AR hermetisch abgedichtet ist. Dabei kann gemäß einem Ausführungsbeispiel im Normalbetrieb des Schienenfahrzeuges der Ventilkörper der Entwässerungsvorrichtung 12 in einer Öffnungsstellung verbleiben.

Die Abbildung in Figur 1 zeigt eine mögliche Ausgestaltung der Entwässerungsvorrichtung 12 mit einem Ventilkörper 14, die mit einem Sensor 15 ausgestattet ist, der zum Erfassen der Druckdifferenz zwischen dem Innenraum IR und dem Außenraum AR dient. Ergibt sich eine betragsmäßige Druckdifferenz, so wird der Ventilkörper 14 vermittels einer Betätigungseinrichtung 16 kurzfristig aktiviert, um entweder ein Überströmen von Luft vom Außenraum AR in den Innenraum IR oder vom Innenraum IR in den Außenraum AR zu vermeiden. Die Betätigungseinrichtung 16 wird beispielsweise gebildet durch einen Hubmagneten mit einem Tauchanker, wobei der Tauchanker mit dem Ventilkörper 14 in Verbindung gebracht ist oder durch diesen selbst gebildet wird.

Die nachfolgend dargelegten weiteren Ausführungsbeispiele bilden Übergangseinrichtungen 100 mit einer Entwässerungsvorrichtung 12, die unterschiedliche Formen von Ventilkörpern 14 zeigen, die die Fluidpassage 17 der Entwässerungsvorrichtung 12 selbsttätig schließen können.

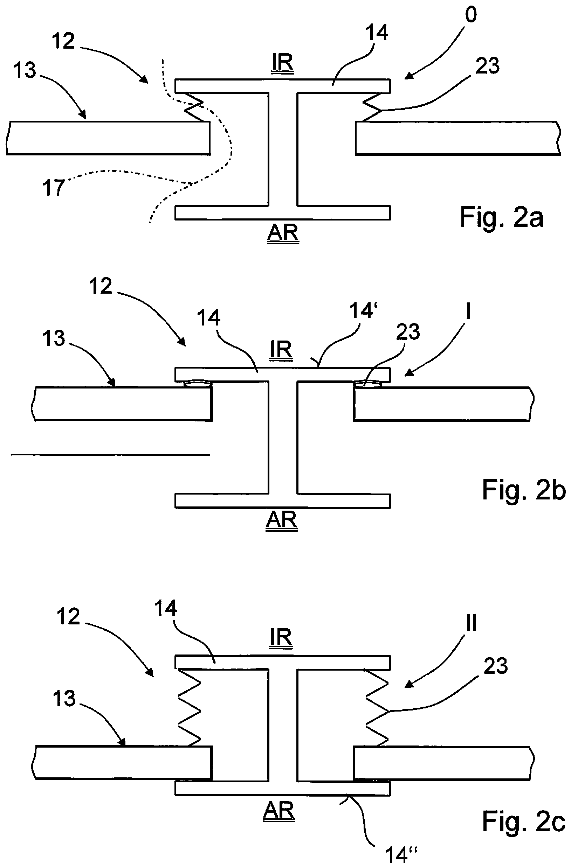

Die Figuren 2a, 2b und 2c zeigen ein Ausführungsbeispiel einer Entwässerungsvorrichtung 12 mit einem Ventilkörper 14, der in den Abbildungen in verschiedenen Stellungen 0, I und II dargestellt ist.

Der Ventilkörper 14 trennt im Bodenbereich 13 den Innenraum IR vom Außenraum AR abhängig von der Schließstellung I und II ab, wobei in der Öffnungsstellung 0 eine Fluidpassage 17 zwischen dem Innenraum IR und dem Außenraum AR gebildet ist.

Der Ventilkörper 14 ist mit der Kraft eines Federelementes 23 beaufschlagt, wobei das Federelement 23 in Wirkverbindung mit dem Ventilkörper 14 so eingerichtet ist, dass der Ventilkörper 14 in der in Figur 2a gezeigten Öffnungsstellung 0 verbleibt, wenn keine Druckdifferenz zwischen dem Innenraum IR und dem Außenraum AR vorherrscht.

Erfolgt eine plötzliche Druckschwankung und steigt der Druck im Innenraum IR gegenüber dem Druck im Außenraum AR schlagartig an, so wird durch eine innere Angriffsfläche 14' des Ventilkörpers 14 dieser in Richtung zum Außenraum AR gegen die Kraft des Federelementes 23 verlagert, sodass sich die erste Schließstellung I einstellt, wie in Figur 2b gezeigt. Durch einen nicht näher dargestellten Dichtbereich erfolgt eine Abdichtung der Entwässerungsvorrichtung 12 im Bodenbereich 13 mit dem Ventilkörper 14, sodass eine Fluidpassage 17 gemäß Figur 2a unterbrochen ist. Eine derartige Situation entsteht beispielsweise bei einem Sog im Außenraum AR etwa bei einem entgegenkommenden Schienenfahrzeug oder bei einer Tunnelausfahrt. Dabei verhindert die sehr schnelle Überführung des Ventilkörpers 14 von der Öffnungsstellung 0 in die erste Schließstellung I ein Überströmen von Luft vom Innenraum IR in den Außenraum AR.

Die Figur 2c zeigt das Ventil 14 in einer zweiten Schließstellung II, in die der Ventilkörper 14 dann überführt wird, wenn die äußere Angriffsfläche 14" mit Luftdruck beaufschlagt wird, der größer ist als der Luftdruck im Innenraum IR. Sodann wird der Ventilkörper 14 in die zweite Schließstellung II verbracht, wobei die Überführung von der Öffnungsstellung 0 in die zweite Schließstellung II ebenfalls gegen die Kraft des Federelementes 23 erfolgt. Auch in der zweiten Schließstellung II wird die Fluidpassage 17 gemäß Figur 2a der Entwässerungsvorrichtung 12 durch den Ventilkörper 14 verschlossen, so dass keine Luft vom Außenraum AR in den Innenraum IR überströmen kann.

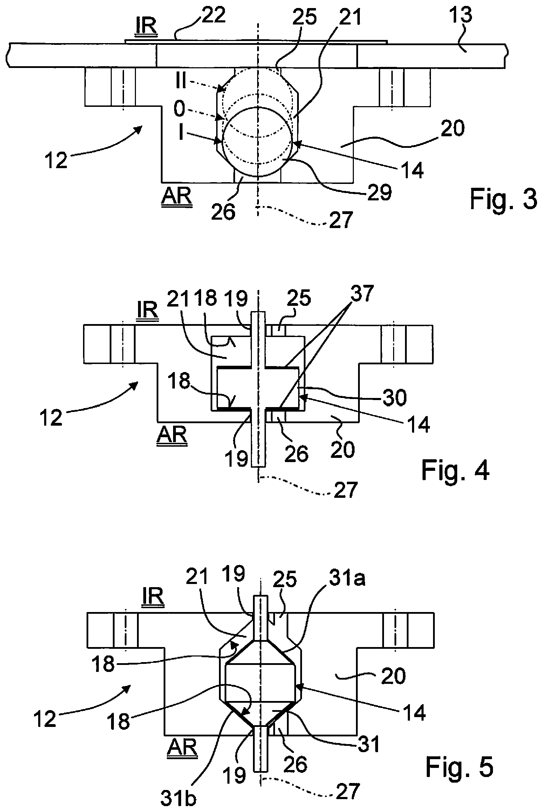

Figur 3 zeigt ein weiteres Ausführungsbeispiel einer Entwässerungsvorrichtung 12 mit einem Grundkörper 20, in dem eine Kammer 21 ausgebildet ist. Der Ventilkörper 14 ist als Kugel 29 ausgeführt und in der Kammer 21 aufgenommen. Schwerkraftbedingt verbleibt zunächst die Kugel 29 in der unteren, dargestellten Schließstellung und verschließt einen Auslass 26. Dringt Wasser in die Kammer 21 ein, so kann die Kugel 29 hydrostatisch aufschwimmen und gibt so den Auslass 26 frei, sodass das Wasser durch den Auslass 26 nach außen abgeführt werden kann.

Fällt der Druck im Außenraum AR schlagartig ab, sodass im Innenraum IR ein Überdruck gegenüber dem Außenraum AR entsteht, so kann die Kugel 29 in der gezeigten Stellung verbleiben und den Auslass 26 verschließen, und es kann keine Luft vom Innenraum IR in den Außenraum AR überströmen.

Steigt der Druck im Außenraum AR gegenüber dem Innenraum IR schlagartig an, so wird die Kugel 29 entlang einer Ventilkörperachse 27 zur Anlage gegen den Einlass 25 in der Kammer 21 überführt und dichtet in dieser Stellung den Einlass 25 ebenfalls ab.

Die gezeigte Stellung des Ventilkörpers 14 entspricht als Ruhestellung der ersten Schließstellung I, in der der Ventilkörper 14 im Normalbetrieb verbleibt, sofern keine Druckdifferenz vorherrscht, bei der der Druck im Außenraum AR größer ist als im Innenraum IR.

Der Grundkörper 20 ist auf einer Unterseite des Bodenbereiches 13 angeordnet gezeigt. Auf einer Oberseite des Bodenbereiches 13 ist beispielhaft ein Sieb 22 gezeigt, das verhindert, dass Feststoffpartikel und sonstige Verunreinigungen in die Entwässerungsvorrichtung 12 eindringen können. Das Sieb 22 ist insbesondere entnehmbar vom Bodenbereich 13 ausgebildet und angeordnet.

Das Ausführungsbeispiel der Entwässerungsvorrichtung 12 gemäß Figur 4 zeigt einen unmittelbar vergleichbaren Aufbau gegenüber der Entwässerungsvorrichtung 12 gemäß Figur 3, und gleiche Bezugszeichen bezeichnen gleiche Merkmale wie in Figur 3 beschrieben. Die Entwässerungsvorrichtung 12 weist einen Grundkörper 20 mit einer Kammer 21 auf, wobei der Ventilkörper 14 als Zylinder 30 gebildet ist. Dieser ist entlang der Ventilkörperachse 27 hubbeweglich am Grundkörper 20 aufgenommen, wofür der Grundkörper 20 Führungsmittel 19 beispielshaft in Gestalt von Führungsbohrungen aufweist.

In den Grundkörper 20 sind ein Einlass 25 und ein Auslass 26 eingerichtet, die die Kammer 21 mit dem Innenraum IR und dem Außenraum AR verbinden, und in Abhängigkeit der Stellung entlang der Ventilkörperachse 27 kann der Zylinder 30 zwischen der ersten Schließstellung und der zweiten Schließstellung hin und her bewegt werden. Dabei verschließt der Zylinder 30 den Einlass 25 und den Auslass 26 durch eine Anlage gegen eine jeweilige Gegendichtfläche 18, wobei das Auslösen der Hubbewegung des Zylinders 30 entlang der Ventilkörperachse 27 auf gleiche Weise erfolgt wie gemäß Figur 3.

Figur 5 zeigt eine Variante einer Entwässerungsvorrichtung 12 mit einem Ventilkörper 14 in Form eines Doppelkegels 31, der zum Abdichten gegen die Gegendichtflächen 18 sich gegenüberliegende Kegelmantelabschnitte 31a, 31b aufweist, sodass der Ventilkörper 14 über die Kegelmantelabschnitte 31a, 31b den Einlass 25 und den Auslass 26 bei Anlage gegen die Gegendichtflächen 18 wechselweise abdichten kann. Damit bildet der Ventilkörper 14 einen Doppelkegel 31, der, wie auch bereits in Zusammenhang mit Figur 3 beschrieben, entlang der Ventilkörperachse 27 mit Führungsmitteln 19 hubbeweglich geführt ist.

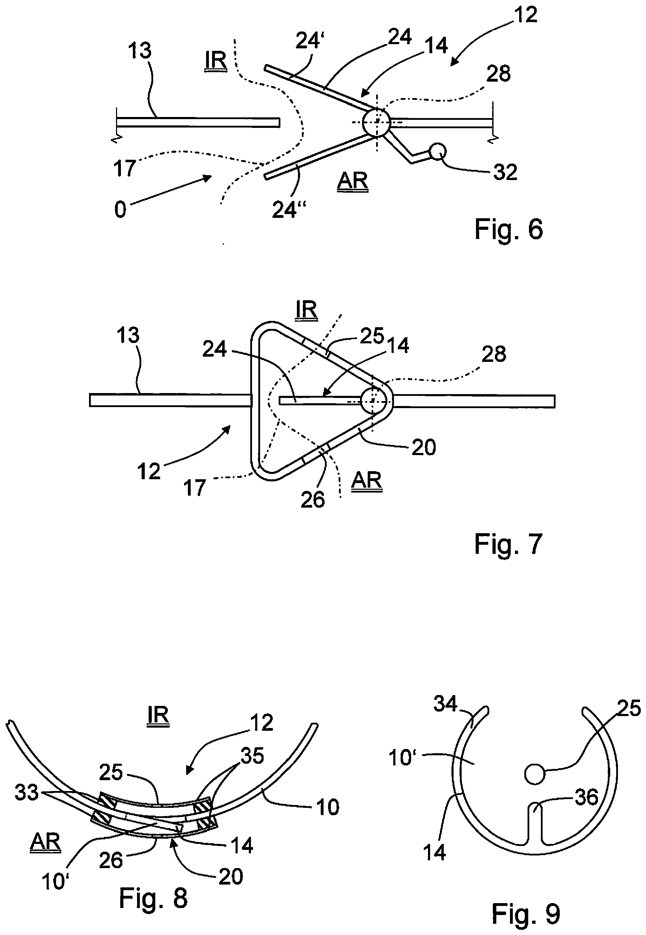

Figur 6 zeigt eine Variante einer Entwässerungsvorrichtung 12 in Anordnung in einem Bodenbereich 13 mit einem Ventilkörper 14, der in Form einer Klappe oder einer Membran mit einem Flächenelement 24 gebildet ist. Das Flächenelement 24 weist einen ersten Schenkel 24' und einen zweiten Schenkel 24" auf. Die Stellung, in der sich der Ventilkörper 14 befindet, entspricht der Öffnungsstellung 0, und es ergibt sich eine freie Fluidpassage 17 zwischen dem Innenraum IR und dem Außenraum AR. Die gezeigte Stellung kann durch ein Gegengewicht 32 aufrechterhalten bleiben.

Fällt der Druck im Außenraum AR gegenüber dem Druck im Innenraum IR schlagartig ab, so verdreht sich das Flächenelement 24 mit den beiden Schenkeln 24', 24" gegen den Uhrzeigersinn in der Schwenkachse 28, und der erste Schenkel 24' verschließt gegen den Bodenbereich 13. Steigt der Druck im Außenraum AR gegenüber dem Innenraum IR schlagartig an, so gelangt der zweite Schenkel 24" des Flächenelementes 24 gegen den Bodenbereich 13 und dichtet die Fluidpassage 17 ebenfalls ab. Zur Aufrechterhaltung der gezeigten Öffnungsstellung 0 kann in der Schwenkachse 28 in nicht näher gezeigter Weise ein Federelement vorhanden sein, und die Auslenkung des Flächenelementes 24 in die jeweilige Schließstellung erfolgt gegen die Federkraft des Federelementes. Ein Gegengewicht 32 hält das Flächenelement 24 zusätzlich oder alternativ zu einer Federkraft eines Federelementes in der Schwenkachse 28 in der gezeigten Öffnungsstellung 0.

Figur 7 zeigt schließlich ein leicht abgewandeltes Ausführungsbeispiel einer Entwässerungsvorrichtung 12 in schematischer Anordnung in dem Bodenbereich 13 mit einem Ventilkörper 14 in Form eines Flächenelementes 24, das schwenkbeweglich in einem Grundkörper 20 aufgenommen ist. Das Flächenelement 24 ist in dem beispielhaft dreieckig ausgebildeten Grundkörper 20 der Entwässerungsvorrichtung 12 in einer Schwenkachse 28 verschwenkbar, und das Flächenelement 24 kann gegen den Einlass 25 verschwenken, wenn der Druck im Außenraum AR gegenüber dem Innenraum IR schlagartig ansteigt, und das Flächenelement 24 kann gegen den Auslass 26 zur Anlage gelangen, wenn der Druck im Außenraum AR gegenüber dem Innenraum IR schlagartig abfällt und die gezeigte Fluidpassage 17 geschlossen wird. Die gezeigte Öffnungsstellung 0 des Flächenelementes 23 kann ebenfalls durch ein Federelement und/oder ein Gegengewicht aufrecht erhalten bleiben, das in nicht näher gezeigter Weise in Verbindung mit der Schwenkachse 28 angeordnet ist.

Die Figur 8 stellt eine Seitenansicht eines Ausführungsbeispiels einer Entwässerungsvorrichtung 12 dar, gemäß dem der Ventilkörper 14 der Entwässerungsvorrichtung 12 aus einem Balgabschnitt 10' des Balges 10 selbst gebildet ist, wobei der Balgabschnitt 10' mittels zueinander beabstandeter Flächenkörper 35 umschlossen ist. Der Balgabschnitt 10' ist grundsätzlich flexibel bzw. biegeweich und kann so wie eine Membran wechselweise von innen gegen die sich gegenüberliegenden Flächenkörper 35 zur Anlage gelangen, wenn eine Druckdifferenz zwischen dem innerhalb IR und außerhalb AR des Durchgangsbereichs 11 wirkenden Druck auftritt. In den gegenüberliegenden Flächenkörpern 35 sind ein Einlass 25 und ein Auslass 26 eingebracht. Im Fall einer Druckdifferenz wird der Ventilkörper 14 in Form des Balgabschnittes 10' ausgelenkt und gelangt von innen gegen die Flächenkörper 35 und verschließt so den Einlass 25 bzw. den Auslass 26.

Figur 9 zeigt die Entwässerungsvorrichtung 12 in der Welle eines Balges 10 gemäß Figur 8, wobei die dargestellte Draufsicht zeigt, dass der Balgabschnitt 10' durch einen ausgetrennten, beispielsweise ausgeschnittenen oder ausgestanzten Bereich 34 mit einem verbleibenden Steg am eigentlichen Balg 10 gebildet ist, womit ebenfalls ein Ventilkörper 14 erzeugt wird, der den angedeuteten Einlass 25 bzw. Auslass 26 abdecken kann, der - wie in Figur 8 gezeigt - im parallel darüber bzw. darunter angebrachten Flächenkörper 35 eingebracht ist. Im Balgabschnitt 10' ist weiterhin ein Einschnitt 36 eingebracht, um in verbesserter Weise in der Öffnungsstellung eine Fluidpassage freizugeben.

Um die Flächenkörper 35 jeweils beabstandet zum ebenfalls flächigen Balg 10 an dessen gegenüberliegenden Seiten anzuordnen, sind Ringkörper 33 gezeigt, die den Balgabschnitt 10' zur Bildung des Ventilkörpers 14 umschließen. Es ist eine Kammer 21 innerhalb der Ringkörper 33 gebildet, die seitlich gegen den Innenraum IR und den Außenraum AR mit den Flächenkörpern 35 abgeschlossen wird. Die Flächenkörper 35 und/oder auch die Ringkörper 33 sind beispielsweise aus dem Material des Balges 10 gebildet und miteinander verklebt und/oder vernäht.

Diese Variante einer Entwässerungsvorrichtung 12, die beispielsweise an einer tiefsten Stelle eine Balgwelle im Balg 10 der Übergangseinrichtung 100 eingebracht ist, ist besonders einfach ausgeführt und kann auch noch nachträglich in einen Balg 10 eingebracht werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearbeiteten Ausführungen Gebrauch macht.

### Bezugszeichenliste:

- 100: Übergangseinrichtung

- 10: Balg
- 10': Balgabschnitt
- 11: Durchgangsbereich
- 12: Entwässerungsvorrichtung
- 13: Bodenbereich
- 14: Ventilkörper
- 14': innere Angriffsfläche
- 14": äußere Angriffsfläche
- 15: Sensor
- 16: Betätigungseinrichtung
- 17: Fluidpassage
- 18: Gegendichtfläche
- 19: Führungsmittel
- 20: Grundkörper
- 21: Kammer
- 22: Sieb
- 23: Federelement
- 24: Flächenelement
- 24a: erster Schenkel
- 24b: zweiter Schenkel
- 25: Einlass
- 26: Auslass
- 27: Ventilkörperachse
- 28: Schwenkachse
- 29: Kugel
- 30: Zylinder
- 31: Doppelkegel
- 31a: Kegelmantelabschnitt
- 31b: Kegelmantelabschnitt
- 32: Gegengewicht
- 33: Ringkörper
- 34: ausgetrennter Bereich
- 35: Flächenkörper
- 36: Einschnitt
- 37: Dichtelement

- 0: Öffnungsstellung
- I: erste Schließstellung
- II: zweite Schließstellung
- IR: Innenraum
- AR: Außenraum

## Patentansprüche

1. Übergangseinrichtung (100) zum Verbinden von zwei beweglich miteinander verbundenen Fahrzeugteilen, insbesondere eines Schienenfahrzeugs, mit
- einem Balg (10), der einen Durchgangsbereich (11) der Übergangseinrichtung (100) umlaufend umschließt, und
- einer Entwässerungsvorrichtung (12), die im Bodenbereich (13) der Übergangseinrichtung (100) angeordnet ist und die eine Fluidpassage (17) zum Abführen von Wasser aus dem Durchgangsbereich (11) nach außen bereitstellt,
**dadurch gekennzeichnet, dass**
die Entwässerungsvorrichtung (12) einen Ventilkörper (14) aufweist, durch den die Fluidpassage (17) abhängig von einer Druckdifferenz zwischen einem innerhalb (IR) und außerhalb (AR) des Durchgangsbereichs (11) wirkenden Druck selbsttätig verschließbar ist.

2. Übergangseinrichtung (100) nach Anspruch 1,
**dadurch gekennzeichnet, dass**
der Ventilkörper (14) zwischen wenigstens zwei der folgenden drei Stellungen (0, I, II) beweglich in oder an einem Grundkörper (20) der Entwässerungsvorrichtung (12) angeordnet ist:
- eine Öffnungsstellung (0), in der die Fluidpassage (17) für den Durchtritt eines Fluids, insbesondere Wasser, geöffnet ist, wobei die Öffnungsstellung (0) einnehmbar ist, wenn die Druckdifferenz einen vorgegebenen Grenzwert nicht überschreitet,
- eine erste Schließstellung (I), in der die Fluidpassage (17) insbesondere druckdicht verschlossen ist, wobei der Ventilkörper (14) die erste Schließstellung (I) zumindest dann einnimmt, wenn der Grenzwert der Druckdifferenz überschritten ist und der Druck innerhalb (IR) des Durchgangsbereichs (11) größer ist als außerhalb (AR) des Durchgangsbereichs (11), und
- eine zweite Schließstellung (II), in der die Fluidpassage (17) insbesondere druckdicht verschlossen ist, wobei der Ventilkörper (14) die zweite Schließstellung (II) zumindest dann einnimmt, wenn der Grenzwert der Druckdifferenz überschritten ist und der Druck innerhalb (IR) des Durchgangsbereichs (11) kleiner ist als außerhalb (AR) des Durchgangsbereichs (11).

3. Übergangseinrichtung (100) nach einem der vorhergehenden Ansprüche,
**dadurch gekennzeichnet, dass**
die Entwässerungsvorrichtung (12) einen Sensor (15) zum Erfassen der Druckdifferenz sowie eine Betätigungseinrichtung (16) zum Betätigen des Ventilkörpers (14) in Abhängigkeit von der erfassten Druckdifferenz aufweist, wobei der Ventilkörper (14) insbesondere elektromagnetisch betätigbar ist.

4. Übergangseinrichtung (100) nach Anspruch 2,
**dadurch gekennzeichnet, dass**
der Ventilkörper ein Dichtelement (37), insbesondere aus Gummi, aufweist, mit dem der Ventilkörper (14) in seiner Schließstellung (I, II) dichtend gegen eine Gegendichtfläche (18) anliegt, so dass die Fluidpassage (17) verschlossen ist.

5. Übergangseinrichtung (100) nach einem der Ansprüche 2 oder 4,
**dadurch gekennzeichnet, dass**
der Ventilkörper (14) ein Führungsmittel (19) zur Führung des Ventilkörpers (14) bei seiner Bewegung von seiner Öffnungsstellung (0) in seine Schließstellung (I, II) aufweist.

6. Übergangseinrichtung (100) nach einem der vorhergehenden Ansprüche,
**dadurch gekennzeichnet, dass**
die Entwässerungsvorrichtung (12) einen Grundkörper (20) mit einer darin gebildeten Kammer (21) aufweist, in der der Ventilkörper (14) beweglich aufgenommen ist, wobei der Ventilkörper (14) optional aus der Kammer (21) entnehmbar aufgenommen ist.

7. Übergangseinrichtung (100) nach Anspruch 6,
**dadurch gekennzeichnet, dass**
der Grundkörper (20) geteilt ausgebildet ist, wobei zumindest zwei Grundkörperbauteile lösbar miteinander verbunden sind.

8. Übergangseinrichtung (100) nach einem der vorhergehenden Ansprüche,
**dadurch gekennzeichnet, dass**
die Entwässerungsvorrichtung (12) ein Sieb (22) zum Zurückhalten von Feststoffpartikeln aufweist.

9. Übergangseinrichtung (100) nach einem der vorhergehenden Ansprüche,
**dadurch gekennzeichnet, dass**
der Ventilkörper (14) als Auftriebskörper ausgebildet ist und eine Dichte aufweist, die geringer ist als die Dichte von Wasser und/oder wobei der Ventilkörper (14) ein poröses Material wie Styropor oder Kork aufweist und/oder als ein Hohlkörper ausgebildet ist.

10. Übergangseinrichtung (100) nach einem der Ansprüche 2, 4 oder 5,
**dadurch gekennzeichnet, dass**
die Entwässerungsvorrichtung (12) wenigstens ein Federelement (23) aufweist, wobei der Ventilkörper (14) entgegen einer von dem Federelement (23) ausgeübten Federkraft in seine Schließstellung (I, II) auslenkbar ist.

11. Übergangseinrichtung (100) nach einem der vorhergehenden Ansprüche,
**dadurch gekennzeichnet, dass**
der Ventilkörper (14) ein insbesondere als Klappe oder Membran ausgebildetes Flächenelement (24) aufweist, mit dem ein Einlass (25) und/oder ein Auslass (26) der Fluidpassage (17) verschließbar ist.

12. Übergangseinrichtung (100) nach einem der Ansprüche 6 oder 7,
**dadurch gekennzeichnet, dass**
der Ventilkörper (14) gegenüber dem Grundkörper (20) der Entwässerungsvorrichtung (12) in Richtung einer Ventilkörperachse (27) translatorisch beweglich und/oder um eine Schwenkachse (28) schwenkbar gelagert ist.

13. Übergangseinrichtung (100) nach einem der vorhergehenden Ansprüche,
**dadurch gekennzeichnet, dass**
die Entwässerungsvorrichtung (12) ein Gegengewicht (32) aufweist, das in Verbindung mit dem Ventilkörper (14) um eine Schwenkachse (28) drehbeweglich aufgenommen ist, wodurch der Ventilkörper (14) in der Öffnungsstellung (0) verbleibt, wenn die Druckdifferenz einen vorgegebenen Grenzwert nicht überschreitet.

14. Übergangseinrichtung (100) nach einem der vorhergehenden Ansprüche,
**dadurch gekennzeichnet, dass**
der Ventilkörper (14) der Entwässerungsvorrichtung (12) aus einem Balgabschnitt (10') des Balges selbst gebildet ist, wobei der Balgabschnitt (10') mittels zueinander beabstandeter Flächenkörper (35) umschlossen ist, sodass abhängig von der Druckdifferenz der Balgabschnitt (10') basierend auf seiner Flexibilität wechselweise von innen gegen die Flächenkörper (35) zur Anlage bringbar ist und einen Einlass (25) bzw. einen Auslass (26) im Flächenkörper (35) verschließt.

15. Übergangseinrichtung (100) nach einem der vorhergehenden Ansprüche,
**dadurch gekennzeichnet, dass**
die Entwässerungsvorrichtung (12) an einem Rahmenelement der Übergangseinrichtung (100) angeordnet ist, insbesondere derart, dass die Fluidpassage (17) fluchtend mit einer in der Übergangseinrichtung (100) vorgesehenen Durchtrittsöffnung angeordnet ist.

## Claims

1. A passage device (100) for connecting two vehicle parts movably connected to one another, in particular of a rail vehicle, comprising
- a bellows (10) that peripherally surrounds a passage region (11) of the passage device (100); and
- a drainage apparatus (12) that is arranged in the floor region (13) of the passage device (100) and that provides a fluid passage (17) for draining water from the passage region (11) to the outside,
**characterized in that**
the drainage apparatus (12) has a valve body (14) through which the fluid passage (17) is independently closable in dependence on a pressure difference between a pressure acting inside (IR) and outside (AR) the passage region (11).

2. A passage device (100) in accordance with claim 1,
**characterized in that**
the valve body (14) is movably arranged between two of the following three positions (0, I, II) in or at a base body (20) of the drainage apparatus (12):
- an open position (0) in which the fluid passage (17) is open for the passing through of a fluid, in particular water, with the open position (0) being able to be adopted when the pressure difference does not exceed a predefined limit value;
- a first closed position (I) in which the fluid passage (17) is in particular closed in a pressure-tight manner, with the valve body (14) at least adopting the first closed position (I) when the limit value of the pressure difference has been exceeded and the pressure inside (IR) the passage region is smaller than outside (AR) the passage region (11); and
- a second closed position (II) in which the fluid passage (17) is in particular closed in a pressure-tight manner, with the valve body (14) at least adopting the second closed position (II) when the limit value of the pressure difference has been exceeded and the pressure inside (IR) the passage region (11) is smaller than outside (AR) the passage region (11).

3. A passage device (100) in accordance with one of the preceding claims,
**characterized in that**
the drainage apparatus (12) has a sensor (15) for detecting the pressure difference and an actuation device (16) for actuating the valve body (14) in dependence on the detected pressure difference, with the valve body (14) in particular being electromagnetically actuable.

4. A passage device (100) in accordance with claim 2,
**characterized in that**
the valve body has a sealing element (37), in particular of rubber, by which the valve body (14) is in sealing contact with a counter sealing surface (18) in its closed position (I, II) so that the fluid passage (17) is closed.

5. A calibrator sleeve (100) in accordance with one of the claims 2 or 4,
**characterized in that**
the valve body (14) has a guide means (19) for guiding the valve body (14) on its movement from its open position (0) into its closed position (I, II).

6. A passage device (100) in accordance with one of the preceding claims,
**characterized in that**
the drainage apparatus (12) has a base body (20) with a chamber (21) formed therein in which the valve body (14) is movably received, with the valve body (14) optionally being received removably from the chamber (21).

7. A passage device (100) in accordance with claim 6,
**characterized in that**
the base body (20) is formed as divided, with at least two base body elements being releasably connected to one another.

8. A passage device (100) in accordance with one of the preceding claims,
**characterized in that**
the drainage apparatus (12) has a screen (22) for holding back solid particles.

9. A passage device (100) in accordance with one of the preceding claims,
**characterized in that**
the valve body (14) is formed as a float and has a density that is smaller than the density of water and/or with the valve body (14) having a porous material such as polystyrene or cork and/or being formed as a hollow body.

10. A passage device (100) in accordance with one of the claims 2, 4, or 5,
**characterized in that**
the drainage apparatus (12) has at least one spring element (23), with the valve body (14) being deflectable into its closed position (I, II) against a spring force exerted by the spring element (23).

11. A passage device (100) in accordance with one of the preceding claims,
**characterized in that**
the valve body (14) has a planar element (24) that is in particular formed as a flap or as a membrane by which an inlet (25) and/or an outlet (26) of the fluid passage (17) is closable.

12. A passage device (100) in accordance with one of the claims 6 or 7,
**characterized in that**
the valve body (14) is movable in translation in the direction of the valve body axis (27) with respect to the base body (20) and/or is pivotably supported about a pivot axis (28).

13. A passage device (100) in accordance with one of the preceding claims,
**characterized in that**
the drainage apparatus (12) has a counterweight (32) that is rotationally movably received about a pivot axis (28) in connection with the valve body (14), whereby the valve body (14) remains in the open position (0) if the pressure difference does not exceed a predefined limit value.

14. A passage device (100) in accordance with one of the preceding claims,
**characterized in that**
the valve body (14) of the drainage apparatus (12) is formed from a bellows section (10') of the bellows itself, with the bellows section (10') being surrounded by means of planar bodies (35) that are spaced apart from one another so that the bellows section (10') can be alternately brought from the inside into contact with the planar body (34) on the basis of its flexibility in dependence on the pressure difference and closes an inlet (25) or an outlet (26) in the planar body (35).

15. A passage device (100) in accordance with one of the preceding claims,
**characterized in that**
the drainage apparatus (12) is arranged at a frame element of the passage device (100), in particular such that the fluid passage (17) is arranged in alignment with a passage opening provided in the passage device (100).

## Revendications

1. Dispositif de passage (100) permettant de raccorder deux parties de véhicule, en particulier d'un véhicule ferroviaire, reliées l'une à l'autre de manière mobile, comprenant
- un soufflet (10), qui entoure de manière périphérique une zone de passage (11) du dispositif de passage (100), et
- un dispositif de drainage (12), qui est disposé dans la zone de plancher (13) du dispositif de passage (100) et qui offre un passage de fluide (17) permettant d'évacuer de l'eau hors de la zone de passage (11) vers l'extérieur,
**caractérisé en ce que**
le dispositif de drainage (12) comporte un corps de soupape (14), par lequel le passage de fluide (17) peut être fermé automatiquement en fonction d'une différence de pression entre une pression agissant à l'intérieur (IR) et à l'extérieur (AR) de la zone de passage (11).

2. Dispositif de passage (100) selon la revendication 1,
**caractérisé en ce que**
le corps de soupape (14) est disposé de manière mobile entre au moins deux des trois positions (0, I, II) suivantes dans ou sur un corps de base (20) du dispositif de drainage (12) :
- une position d'ouverture (0), dans laquelle le passage de fluide (17) pour l'écoulement d'un fluide, en particulier de l'eau, est ouvert, la position d'ouverture (0) pouvant être occupée quand la différence de pression ne dépasse pas une valeur limite prédéfinie,
- une première position de fermeture (I), dans laquelle le passage de fluide (17) est fermé en particulier de manière étanche sous pression, le corps de soupape (14) occupant la première position de fermeture (I) au moins quand la valeur limite de la différence de pression est dépassée et que la pression à l'intérieur (IR) de la zone de passage (11) est supérieure à celle à l'extérieur (AR) de la zone de passage (11), et
- une seconde position de fermeture (II), dans laquelle le passage de fluide (17) est fermé en particulier de manière étanche sous pression, le corps de soupape (14) occupant la seconde position de fermeture (II) au moins quand la valeur limite de la différence de pression est dépassée et que la pression à l'intérieur (IR) de la zone de passage (11) est inférieure à celle à l'extérieur (AR) de la zone de passage (11).

3. Dispositif de passage (100) selon l'une des revendications précédentes,
**caractérisé en ce que**
le dispositif de drainage (12) comporte un capteur (15) destiné à détecter la différence de pression ainsi qu'un dispositif d'actionnement (16) destiné à actionner le corps de soupape (14) en fonction de la différence de pression détectée, le corps de soupape (14) pouvant en particulier être actionné de manière électromagnétique.

4. Dispositif de passage (100) selon la revendication 2,
**caractérisé en ce que**
le corps de soupape comporte un élément d'étanchéité (37), en particulier en caoutchouc, avec lequel le corps de soupape (14), dans sa position de fermeture (I, II), s'applique de manière étanchéifiante contre une surface opposée d'étanchéité (18), de telle sorte que le passage de fluide (17) est fermé.

5. Dispositif de passage (100) selon l'une des revendications 2 ou 4,
**caractérisé en ce que**
le corps de soupape (14) comporte un moyen de guidage (19) destiné à guider le corps de soupape (14) lors de son déplacement de sa position d'ouverture (0) à sa position de fermeture (I, II).

6. Dispositif de passage (100) selon l'une des revendications précédentes,
**caractérisé en ce que**
le dispositif de drainage (12) comporte un corps de base (20) avec une chambre (21) formée dans celui-ci, chambre dans laquelle le corps de soupape (14) est reçu de manière mobile, le corps de soupape (14) étant, en option, reçu de manière à pouvoir être retiré de la chambre (21).

7. Dispositif de passage (100) selon la revendication 6,
**caractérisé en ce que**
le corps de base (20) est réalisé en plusieurs parties, au moins deux éléments structuraux de corps de base étant reliés l'un à l'autre de manière libérable.

8. Dispositif de passage (100) selon l'une des revendications précédentes,
**caractérisé en ce que**
le dispositif de drainage (12) comporte un tamis (22) destiné à retenir des particules solides.

9. Dispositif de passage (100) selon l'une des revendications précédentes,
**caractérisé en ce que**
le corps de soupape (14) est réalisé sous la forme d'un flotteur et présente une densité qui est inférieure à la densité de l'eau et/ou dans lequel le corps de soupape (14) comporte un matériau poreux tel que du polystyrène expansé ou du liège et/ou est réalisé sous la forme d'un corps creux.

10. Dispositif de passage (100) selon l'une des revendications 2, 4 ou 5,
**caractérisé en ce que**
le dispositif de drainage (12) comporte au moins un élément formant ressort (23), le corps de soupape (14) pouvant être déplacé dans sa position de fermeture (I, II) à l'encontre d'une force de ressort exercée par l'élément formant ressort (23).

11. Dispositif de passage (100) selon l'une des revendications précédentes,
**caractérisé en ce que**
le corps de soupape (14) comporte un élément plan (24) réalisé en particulier sous la forme d'un clapet ou d'une membrane, avec lequel une entrée (25) et/ou une sortie (26) du passage de fluide (17) peut être fermée.

12. Dispositif de passage (100) selon l'une des revendications 6 ou 7,
**caractérisé en ce que**
le corps de soupape (14) est monté mobile en translation dans la direction d'un axe de corps de soupape (27) et/ou pivotant sur un axe de pivotement (28), par rapport au corps de base (20) du dispositif de drainage (12).

13. Dispositif de passage (100) selon l'une des revendications précédentes,
**caractérisé en ce que**
le dispositif de drainage (12) comporte un contrepoids (32), qui est reçu, en liaison avec le corps de soupape (14), mobile en rotation sur un axe de pivotement (28), moyennant quoi le corps de soupape (14) reste dans la position d'ouverture (0) quand la différence de pression ne dépasse pas une valeur limite prédéfinie.

14. Dispositif de passage (100) selon l'une des revendications précédentes,
**caractérisé en ce que**
le corps de soupape (14) du dispositif de drainage (12) est formé à partir d'une partie de soufflet (10') du soufflet lui-même, la partie de soufflet (10') étant entourée au moyen de corps plans (35) espacés les uns des autres, de telle sorte que, en fonction de la différence de pression, sur la base de sa flexibilité, la partie de soufflet (10') peut être amenée alternativement depuis l'intérieur en appui contre les corps plans (35) et ferme une entrée (25) ou une sortie (26) dans le corps plan (35).

15. Dispositif de passage (100) selon l'une des revendications précédentes,
**caractérisé en ce que**
le dispositif de drainage (12) est disposé sur un élément de cadre du dispositif de passage (100), en particulier de telle manière que le passage de fluide (17) est disposé en alignement avec une ouverture d'écoulement prévue dans le dispositif de passage (100).
